Europäisches Patentamt

European Patent Office

Office européen des brevets

(11) Veröffentlichungsnummer: **0 116 327**

**A1**

(12) **EUROPÄISCHE PATENTANMELDUNG**

(21) Anmeldenummer: 84100880.8

(22) Anmeldetag: 27.01.84

(51) Int. Cl.³: **G 06 F 11/34**
**G 06 F 11/30**

(30) Priorität: 01.02.83 CH 567/83

(43) Veröffentlichungstag der Anmeldung:
22.08.84 Patentblatt 84/34

(84) Benannte Vertragsstaaten:
AT BE DE FR GB IT LU NL SE

(71) Anmelder: Minibit AG
Bachstrasse 41
CH-8912 Obfelden(CH)

(72) Erfinder: Burkhard, Christoph E.
Wissenbach
CH-8932 Mettmenstetten(CH)

(72) Erfinder: Ellenberger, Peter G.
Chileweg 21
CH-8912 Obfelden(CH)

(72) Erfinder: Elmiger, Thomas A.
Bremgarterstrasse 28
CH-5622 Waltenschwil(CH)

(72) Erfinder: Frefel, Hans J.
Steghof
5611 Rothenschwil(CH)

(72) Erfinder: Gfeller, Reto K.
Bremgarterstrasse 28
CH-5622 Waltenschwil(CH)

(74) Vertreter: Blum, Rudolf Emil Ernst et al,
c/o E. Blum & Co Patentanwälte Vorderberg 11
CH-8044 Zürich(CH)

(54) Programmtaxiervorrichtung für Rechenanlagen.

(57) Zur Erkennung und Speicherung von in den Programmen angeordneten Taxierdaten ist die Vorrichtung mittels der Anschlüsse (10,11) der Schnittstelle (4) zwischen einem Rechner und ein Peripheriegerät schaltbar. Für normale Daten ist die Vorrichtung transparent, Taxierdaten hingegen werden von einer programmgesteuerten Logik (1,2) erkannt und in einer Speicheranordnung (3,8) abgelegt. Ein Speicher (8) der Speicheranordnung ist von der Vorrichtung abtrennbar und ist zur Erfassung der Taxierdaten und damit der Programmbenützung vom Programmanbieter lesbar. Damit ist eine genaue und einfache Möglichkeit geschaffen die Benützungsintensität einzelner Programme auf Rechenanlagen zu erfassen und den Programmanwender kostenmässig nur proportional zur Benützung dieser Programme zu belasten. Aufwendige Programme können stärker verrechnet werden als einfache.

EP 0 116 327 A1

- 1 -

## Programmtaxiervorrichtung für Rechenanlagen

-----------------------------------------------------

Die Erfindung betrifft eine Vorrichtung für Rechenanlagen zur Erfassung der Benützungsintensität von Rechnerprogrammen.

Bei Rechenanlagen, insbesonders bei Anlagen mit Mini- und Mikrorechnern, erreichen die Kosten für die Programme oft einen grossen Teil der Anlagekosten, was von vielen Interessenten für solche Anlagen als Missverständnis empfunden wird. Obwohl der Anbieter der Anlage daran interessiert ist, dass der Kunde möglichst alle angebotenen Programme kennenlernen kann, ist eine leihweise Ueberlassung der Programme z.B. für Versuchszwecke aufgrund der leichten Kopierbarkeit von Programmen nicht unproblematisch. Ferner ergibt sich bei verkauften Programmen für den Anbieter kein direkter Aufschluss darüber, wie intensiv ein Programm vom Anwender benützt wird, obschon diese Kenntnis, z.B. für Optimierungsfragen, für den Anbieter von Bedeutung ist.

Für den Anwender stellt sich das Problem, dass er auch nur selten genutzte Programme, welche z.B. nur einmal im Monat gebraucht werden, vollumfänglich kaufen muss. Ferner ist es schwierig, den Nutzen eines Programmes vor der Anwendung zu beurteilen. Dies kann der Anwender nur genügend gründlich tun, nachdem er das Programm bereits gekauft hat.

Kaufen mehrere Unternehmen gemeinsam eine Rechen-

Slc/dp
25.1.1984

anlage so ist eine gerechte Kostenaufteilung oft schwierig. Dies gilt auch für den Fall, dass ein Unternehmen sseine Rechenanlage zeitweise vermietet.

Ueblich ist es allerdings nur, den Preis der Benützung einer Rechenanlage zu bestimmen, indem die Rechenzeit für ein Programm bestimmt wird. Gezeigt wird dies z.B. in den Proceedings of the Joint Computer Conference, Anaheim, Calif., 5.-7. Dez. 1972, Afips Press, (A.F.I.P.S. Conference, Band 41) durch Kreitzberg u.a.: "An approach to job pricing in a multiprogramming environment", Seiten 115 bis 121.

Die US-PS 4 231 106 hingegen zeigt eine Vorrichtung zur Ueberwachung von Ereignissen in einem Rechner, worunter auch die Zeit, die zur Ausführung eines Programms benötigt wird, fällt, oder die Anzahl wie oft ein Programm aufgerufen wird.

Eine dazu ähnliche Vorrichtung zur Ueberwachung von Ereignissen, wie z.B. wie oft ein bestimmtes Ereignis, z.B. ein Tastenanschlag, vorkommt, ist beschrieben im IBM Technical Disclosure Bulletin, Band 25, Nr. 3b, August 1982, New York (US), durch J.A. Hooten u.a.: "Flexible transparent field metering", Seite 1765. Diese Vorrichtungen dienen eigentlich zur Ueberwachung von Ereignissen im Rechner und können deshalb als Ereigniszähler bezeichnet werden. Für die Bestimmung der Rechenkosten kann damit immerhin die Rechenzeit für einzelne Programme erhalten werden, was eine Verrechnung auf herkömmliche Weise erlaubt.

Die US-PS 3 763 474 dagegen zeigt ein eigentliches Diagnosesystem, welches vor allem zur Entwicklung von Rechnerhardware und Fehlersuche in derselben einsetzbar ist. Ein Zusammenhang mit der Ermittlung von Rechenkosten besteht nicht.

Die DE-PS 3 205 852 Al zeigt einen Analysator für die Programmarbeitsverteilung. Dieser dient vorwiegend der Firmwaresystemdiagnose und wird insbesondere bei einer programmgesteuerten Fernsprechanlage verwendet. Ein Zusammenhang mit der Ermittlung von Rechenkosten besteht wiederum allenfalls über die Ermittlung der Rechenzeit.

Der zitierte Stand der Technik trägt deshalb zur Lösung der vorstehend genannten Probleme nur wenig bei und ist als technologischer Hintergrund zu werten.

Der Erfindung liegt deshalb die Aufgabe zugrunde, eine Vorrichtung zu schaffen, die es ermöglicht, die Benützung von Programmen auf Rechenanlagen so zu verrechnen, dass der Anwender nicht für die potentielle Benützbarkeit bezahlt, sondern für die bei ihm verfügbaren Programme proportional zu deren Benützung und zu deren "Wert" belastet werden kann.

Erfindungsgemäss wird dies erreicht, durch eine, mit mindestens einer Datenleitung der Rechenanlage verbundene Anordnung zur Erkennung von den Rechnerprogrammen eigenen Taxierdaten und eine Speicheranordnung zur Aufnahme der Taxierdaten.

Durch die Erfassung der in den Programmen angeordneten Taxierdaten mittels der Vorrichtung, ist die Verrechnung für einzelne Programme gemäss der effektiven Benützung derselben durchführbar. Bei aufwendigen Programmen können den Taxierdaten höhere Ansätze zugrunde liegen.

Bei einer bevorzugten Ausführungsart der Erfindung weist die Speicheranordnung einen tragbaren, von der Anordnung trennbaren Speicher auf.

Bei einer weiteren bevorzugten Ausführungsart ist dieser tragbare Speicher zur Aufnahme eines Teils der Taxierdaten ausgebildet und ausserhalb der Speicheranordnung lesbar. Durch Uebergabe des tragbaren Speichers an den Programmanbieter kann dieser in der Folge die Verrechnung vornehmen.

Bei einer weiteren bevorzugten Ausführungsart ist eine Sperranordnung vorhanden, welche bei einem bestimmten Speicherzustand des tragbaren Speichers den weiteren Gebrauch des entsprechenden Programmes verhindert.

Bei einer weiteren bevorzugten Ausführungsart weist die Speicheranordnung eine Leseanordnung auf. In diesem Fall ohne tragbaren Speicher wird mittels der Leseanordnung eine Ablesung des jeweiligen Speicherinhaltes und damit die Verrechnung der Programmbenützung ermöglicht.

Im folgenden werden Ausführungsbeispiele anhand der Figur näher erläutert. Dabei zeigt

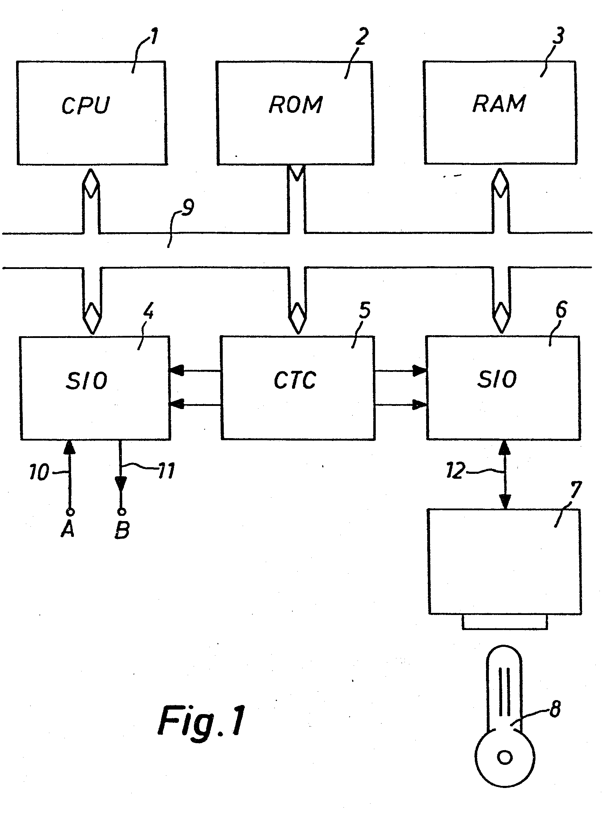

Fig. 1 ein Blockschaltbild der erfindungsgemässen Vorrichtung,

Fig. 2a und 2b ein Detailschaltbild des Mikroprozessors und des nicht tragbaren Speicherteils,

Fig. 3 ein Detailschaltbild der CTC Schaltung,

Fig. 4a und 4b ein Detailschaltbild der seriellen Ausgänge,

Fig. 5 ein Schaltbild der Stromversorgung der Vorrichtung,

Fig. 6 ein Flussdiagramm des die Vorrichtung steuernden Programms für die Taxierdatenerkennung,

Fig. 7 ein Flussdiagramm für die Taxierdatenspeicherung,

Fig. 8 ein Flussdiagramm für die Taxierdatenauslesung, und

Fig. 9 ein Flussdiagramm für die typische Struktur eines Applikationsprogrammes auf der Rechenanlage.

Die Erkennung und Ablage der Taxierdaten erfolgt im dargestellten Beispiel mittels eines Mikroprozessors 1, der durch ein, in einem Festspeicher (EPROM) 2 angeordnetes Programm gesteuert wird. Zwecks Erkennung von Taxierdaten innerhalb des Datenflusses der Rechenanlage ist der Mikroprozessor (CPU) 1 mit einer seriellen zweifachen Schnittstelle 4 in die Datenleitung zwischen dem Rechner, auf dem die, die Taxierdaten enthaltenden Programme ablaufen und ein Peripheriegerät, z.B. einen Drucker geschaltet. Dazu ist die Vorrichtung mit zwei Anschlüssen 10,11 versehen, mittels deren sie mit dem Rechner, bzw.

dem Peripheriegerät verbunden werden kann.

Normalerweise ist das Gerät durchlässig, d.h. es gibt Daten, welche der Rechner schickt, unverändert an das Peripheriegerät weiter. Die Programme können jedoch Taxierdaten ausgeben, die dann von diesem Gerät entdeckt und verarbeitet werden. Das Peripheriegerät erhält nichts von diesen Taxierdaten.

Diese Taxierdaten werden durcheine bestimmte Sequenz eingeleitet, an der sie erkannt werden können. Diese kann den Bedürfnissen angepasst werden, als günstige Lösung könnte die Sequenz (ESC,ESC,1) gemäss der ASCII Codierung verwendet werden. Danach folgt eine variable Menge von Taxierdaten, die durch ein Zeichen (CR) gemäss ASCII abeschlossen wird.

Durch eine weitere spezielle Sequenz (ESC, ESC,2) werden die akkumulierten Taxwerte von diesem Gerät an den Rechner zurück übertragen. Diese Funktion wird nur gelegentlich benötigt. Die akkumulierten Taxierdaten werden durch diesen Vorgang nicht zurückgestellt.

Die Taxierdaten werden in einer Speicheranordnung gespeichert, welche bei diesem Beispiel aus einem Hauptspeicher 3 und einem abtrennbaren tragbaren Speicher 8 besteht. Der von der Vorrichtung trennbare tragbare Speicher 8 kann von einem beliebigen änderbaren nichtflüchtigen Speichermedium gebildet werden, wie z.B. Halbleiterspeichern (EAROM, EEPROM, RAM mit Batteriespeisung), magnetischen Speichern (Magnetbänder, -kartn, -disketten), optischen Speichern oder mechanischen Speichern (Zählwerke). Beim dargestellten Beispiel findet ein EAROM-System (electrically alterable read only memory) Verwendung, welches von der Firma DATAKEY INC., Burnsville, Minnesota, USA hergestellt wird. Dies besteht aus einem Schlüssel 8 (data key portable data element), welcher einen Halbleiterspeicher enthält und einer speziellen Schnittstellenanordnung 7 (keyceptacle peripheral subsystem access element), welche serielle Signale in für den Schlüssel 8 kompatible Signale umwandelt. Der Mikroprozessor 1 bzw. der Hauptspeicher 3, sind mit dem tragbaren Speicher mittels einer Schnittstelle 6 verbunden. Diese wandelt die auf dem, die Elemente 1,2,3,4,5,6 verbindenden Bus 9 parallelen Daten in ein serielles Datensignal um, das über die Verbindung 12 der Schnittstellenanordnung 7 für den Schlüssel 8 zugeführt wird.

Als Bauelemente für die Schnittstellen 4,6 und den Taktgeber 5 für die Schnittstellen werden vorzugsweise hochintegrierte, programmierbare Bausteine verwendet, welche zu dem verwendeten Mikroprozessor kompatibel sind. Bei einer Ausführungsart nach der Figur werden z.B. als Mikroprozessor 1 der Typ Z80-A der Firma Zilog, als Schnittstellen 4,6 Serial Input Output-Bausteine (SIO) der Firma Zilog und als Taktgeber 5 ein Counter-Timer-Circuit (CTC) Baustein, ebenfalls der Firma Zilog verwendet. Als Speicher 2 sind 8k-Byte EPROM-Speicher und als Speicher 3 56k-Byte RAM-Speicher vorgesehen.

Zur Erfassung der Programmbenutzung können nun im Schlüssel 8 alle oder nur Auszüge oder Zusammenfassungen der Taxierdaten gespeichert werden. Der Programmanbieter liest dann in gewissen Zeitabständen diese Daten auf dem Schlüssel und belastet dementsprechend den Anwender. Danach wird der Schlüssel 8 wieder zurückgesetzt bzw. der darin befindliche Speicher gelöscht.

Bei einer anderen Variante bezieht der Programmanwender den Schlüssel 8 mit einem Kredit. Durch die Taxierdaten wird von diesem Kredit abgezählt. Ist der Kredit aufgebraucht, so wird das durch den Mikroprozessor 1 festgestellt und der weitere Gebrauch des Programmes kann gesperrt werden. Der Anwender sendet den Schlüssel 8 zum Aufladen wieder an den Anbieter, wobei dieser feststellen kann, welche Programme wie stark benützt wurden.

Zusätzlich zu den Taxierdaten kann der Schlüssel eine Autorisierungsmaske enthalten, die festlegt, welche Applikationen der Inhaber des betreffenden Schlüssels benützen darf. Damit kann z.B. erreicht werden, dass der Lagerist zwar alle Applikationen benützen darf, die seinen Arbeitsbereich betreffen, aber keine Einsicht in Personaldaten und Hauptbuch erhält.

Bei einer weiteren Ausführung wird als speicherndes Medium eine Diskette verwendet. Diese wird (wie der Schlüssel) ersetzt, wenn der Betrag verbraucht ist. Hier muss darauf geachtet werden, dass der Benützer keinen direkten Zugang zu den Daten auf dieser Diskette hat, oder dass ihm der Zugang nichts nützt. Letzteres kann z.B. durch verschlüsselte Speicherung erreicht werden.

Bei einer anderen Ausführung der Erfindung enthält der Rechner einen Impulszähler, der leicht ablesbar ist. Dieser Zähler kann direkt an den Bus des Computers angeschlossen sein. Die Applikationen senden Taxierimpulse nach Massgabe ihrer Benützung an diesen Zähler. Dieser Zähler kann entweder fortlaufend akkumulieren oder die Benützung beschränken.

Im ersten Fall wird der Zähler regelmässig abgelesen und gemäss Zählerwert wird Rechnung gestellt. Im zweiten Fall wird eine bestimmte Limite gewährt (zum Voraus bezogener Benützungskredit). Wenn diese Limite erreicht ist, wird die Benützung gesperrt.

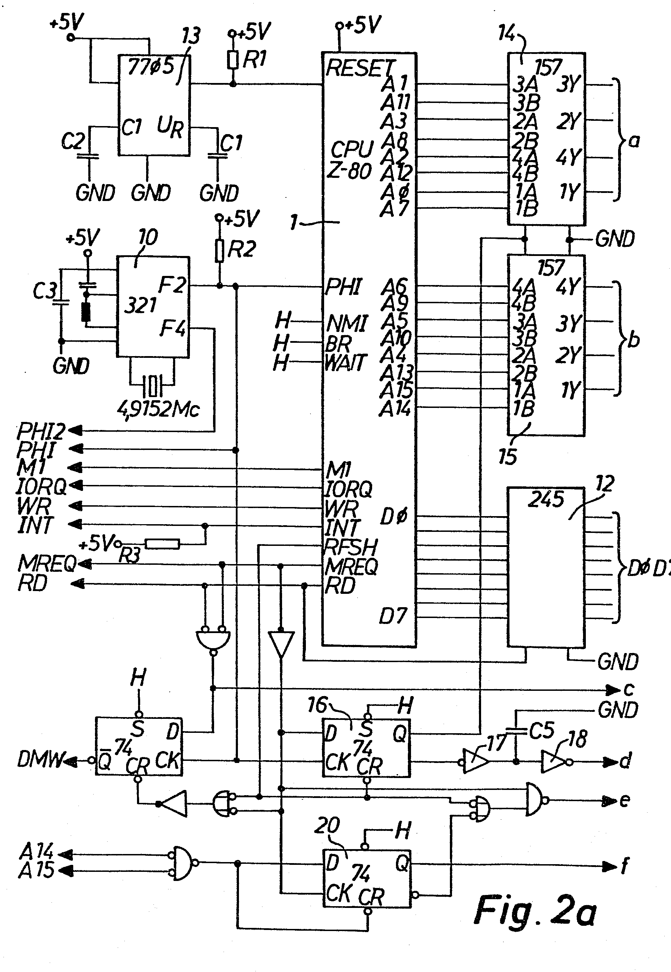

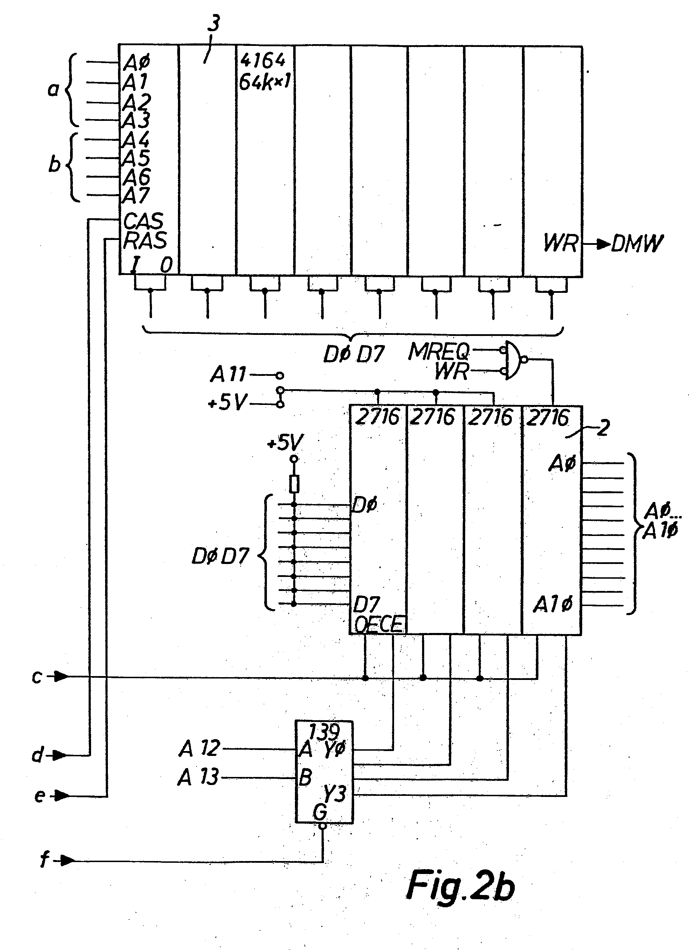

Figuren 2a und 2b zeigen die Steuerbausteine der Schaltung. Der Mikroprozessor 1 (Zilog Z-80) wird durch eine integrierte Taktoszillatorschaltung 10 des Typs 321 mit einem 4,9125 MHz Quarz getaktet. Die Taktfrequenz für den Prozessor 1 beträgt dann die Hälfte der Quarzfrequenz. Die Daten-Ein/Ausgänge des Prozessors sind mittels des Transceivers 12 (Typ 245) gepuffert. Alle Tore und Flip-Flops sind vom TTL-LS Typ.

Eine integrierte Schaltung 13 vom Typ 6605 ist zum Initialisieren des Prozessors beim Einschalten der Betriebsspannung vorgesehen.

Der dynamische RAM-Speicher 3 (8 IC's Typ 4164, 64k x 1) wird mit Reihen/Kolonnen Adressenmultiplextechnik angesteuert. Für diese Adressierung sind die zwei Multiplexer 14,15 (Typ 157) vorgesehen. Die Reihen/Kolonnen Adressignale für die RAM-Anordnung werden vom Flip-Flop 16 (Typ 74) erzeugt und über die beiden Inverter 17,18 (Typ 04) und mit dem 1 nF Kondensator verzögert. Die Verzögerung stellt sicher, dass die Multiplexerausgänge stabil sind, wenn die Adressen vom RAM gelesen werden.

Das Programm ist im EPROM-Speicher 2 abgelegt, welcher im unteren Teil des Adressbereichs adressiert wird. Die Schaltung erlaubt die Verwendung von 16 kBit und 32 kBit EPROM-Speicher. Das Flip-Flop 20 (Typ 74) wird zur Auswahl des EPROM-Speichers anstelle des RAM-Speichers bei tiefen Adressen verwendet.

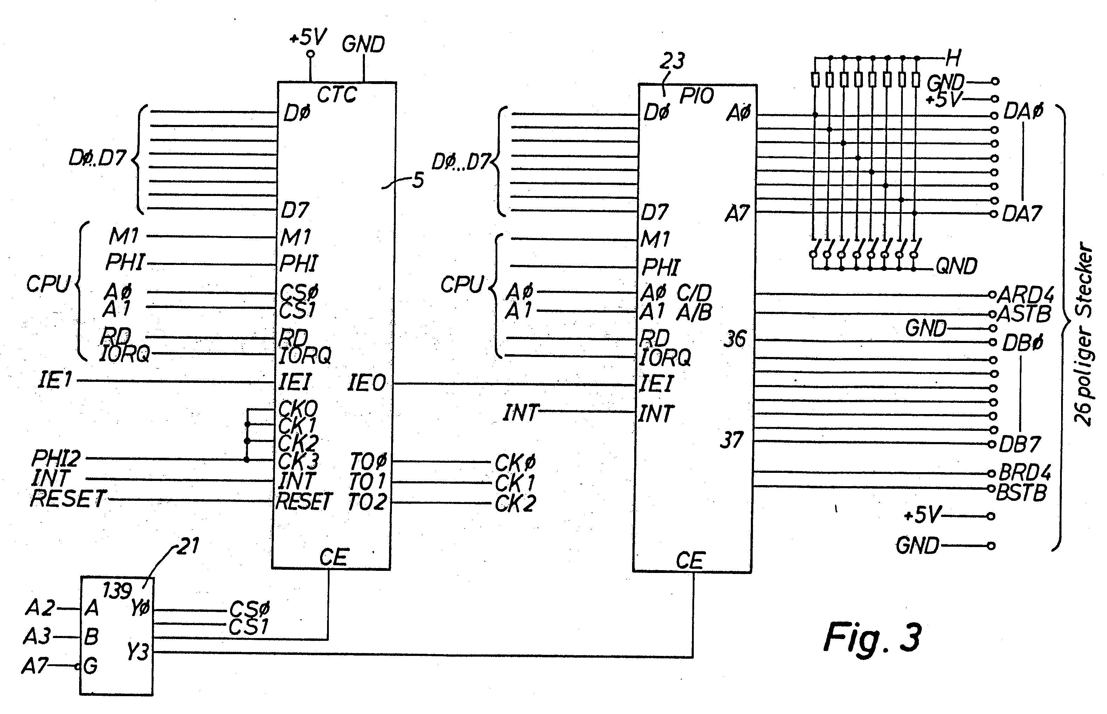

Figur 3 zeigt die CTC Timerschaltung 5 und eine parallele Schnittstellenschaltung 23 (PIO), beides Zilog Komponenten, welche durch den Demultiplexer 21 (Typ 139) adressiert werden.

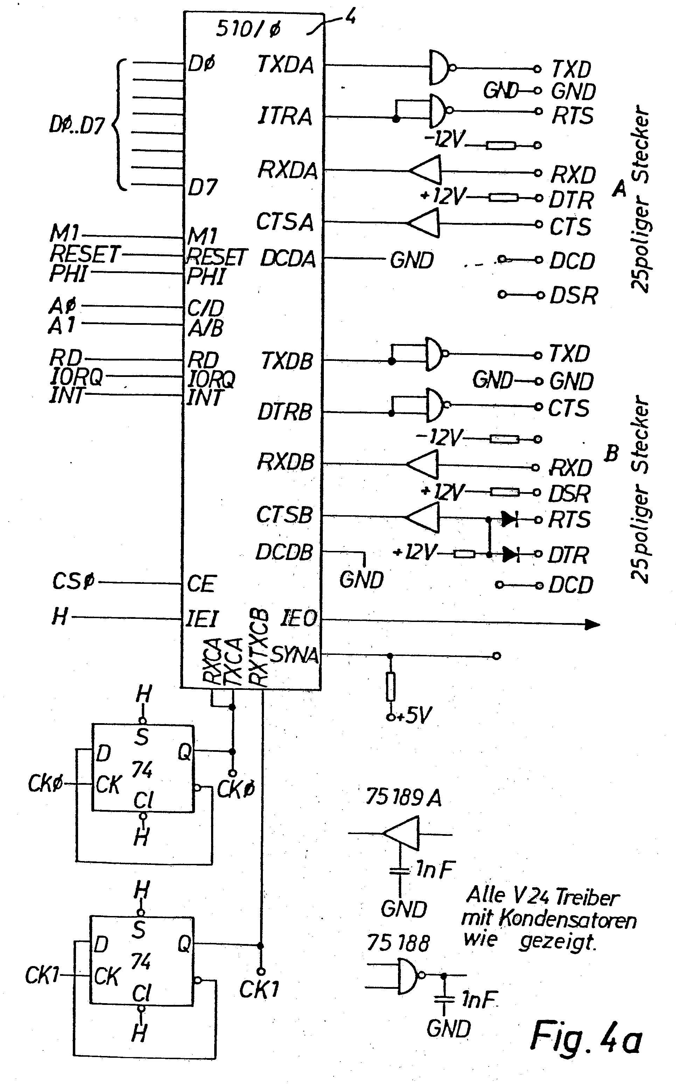

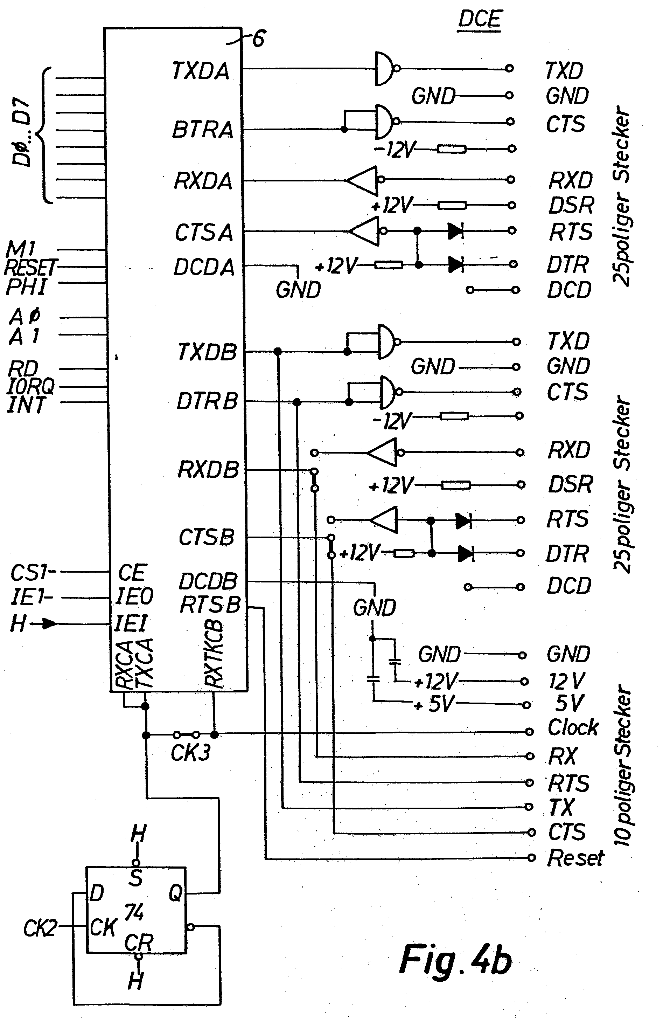

Sowohl CTC 5 wie PIO 23 (und auch die SIO-Schaltungen von Figur 4a und 4b) sind in einer Interrupt daisy chain angeordnet, wie in den Zilog Datenblättern für diese Komponenten vorgeschlagen. Das Signal PHI 2, welches die CTC Timer treibt, beträgt 1/4 der Quartzfrequenz.

Die CTC-Schaltung 5 erzeugt die Taktsignale tiefer Frequenz für die seriellen Eingangs/Ausgangsschaltungen SIO 4,6. Das PIO wird nur für zusätzliche Funktionen, z.B. als Diagnose-Ein/Ausgang verwendet.

Figuren 4a, 4b zeigen die seriellen Eingangs/Ausgangsschaltungen SIO 4,6, welche ebenfalls von entsprechenden Zilog Bausteinen gebildet werden. Jeder Takteingang ist mit einem 1:2 Vorteiler Flip-Flop versehen, welches die Taktfrequenz halbiert und eine symmetrische Signalform ergibt. Die seriellen Ein-/Ausgänge sind mit RS-232 C Leitungs Treiber/Empfängern gepuffert, um der RS-232 C Spezifikation zu genügen.

Die Schnittstelle A ist als DCE (Modem) verdrahtet, die Schnittstelle B als DTE (Terminal). Die Begriffe DTE und DCE werden gemäss der CCITT Empfehlung V.24 verwendet.

Alle Leitungstreiber/Empfänger (Typ 187,188) sind mit einem 1 nF Kondensator versehen, um den Signal-Geräuschabstand zu verbessern.

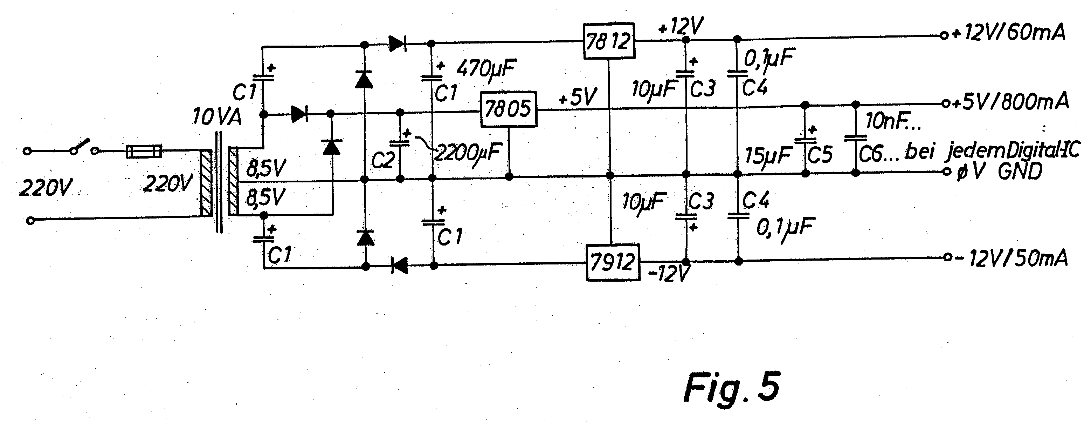

Das in Figur 5 gezeigte Netzteil der Vorrichtung ist eine konventionelle Schaltung mit einem Vollweggleichrichter für die +5V Spannung und zwei Spannungsverdopplerschaltungen für die ±12V Versorgung. Die 5V Spannung ist mit einem 7805 Regulator IC und die ± 12V Spannungen sind mit einem 7812 und einem 7912 Regulator IC (alle von der Firma Motorola) geregelt.

Im folgenden wird das Programm beschrieben, welches den Z-80 Prozessor steuert. Das Programm ist im EPROM-Speicher enthalten und läuft dauernd, wenn die Vorrichtung Betriebsspannung erhält.

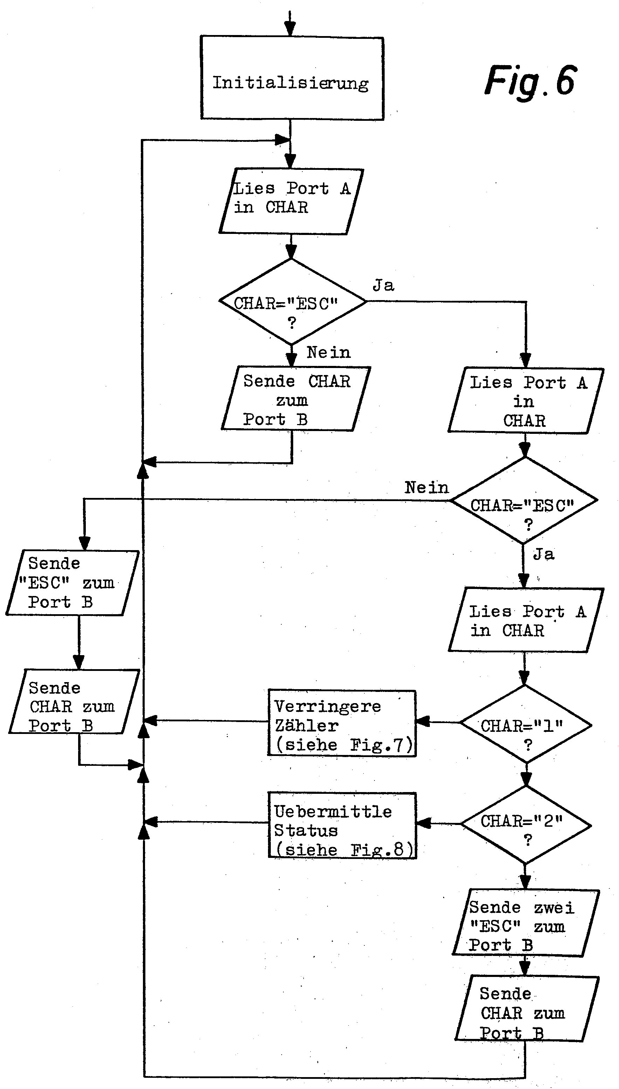

Figur 6 zeigt das Erkennungsprogramm, welches den Anschluss A dauernd überwacht. Wird das Zeichen "ESC" empfangen, wird ein Spezialpfad eingeschlagen, andernfalls wird das empfangene Zeichen ohne Aenderung an den Anschluss B gegeben.

Im Falle dass "ESC" empfangen wird, prüft das Programm, ob das nächste Zeichen wiederum "ESC" lautet. Wenn nicht, wird das vorausgehende "ESC" und das jetzt empfangene Zeichen an den Anschluss B weitergeleitet.

Ist das nächste Zeichen hingegen ein "ESC", wird geprüft, ob das folgende Zeichen an dem Anschluss A eine "1" oder "2" ist. Ist dies nicht der Fall, werden beide "ESC" Kodes und das ihnen gefolgte Zeichen an den Anschluss B weitergeleitet.

Dieses Programm bewirkt, dass die Vorrichtung für alle Sequenzen ausser (ESC, ESC,1) und (ESC, ESC,2) transparent ist, wobei diese Sequenzen von der Vorrichtung abgefangen werden und nicht an den Anschluss B weitergeleitet werden.

Im Falle einer (ESC,ESC,1) Sequenz müssen die

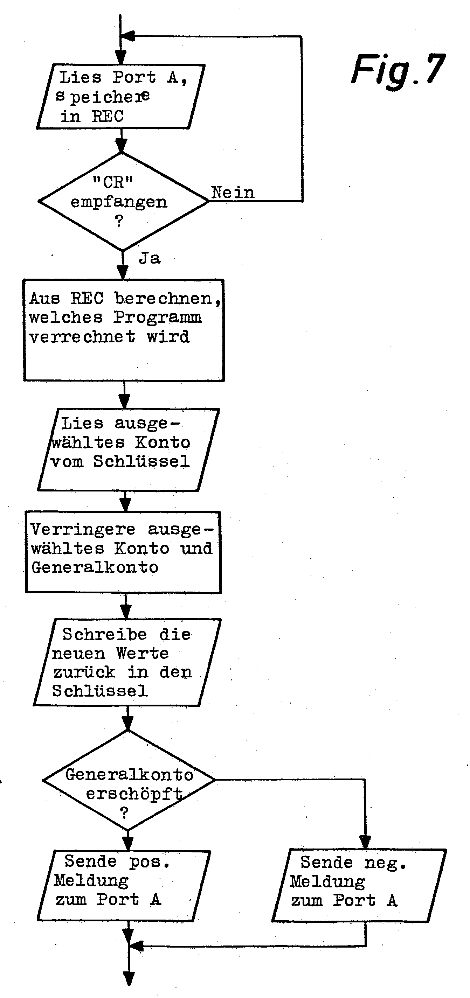

Taxierdaten auf den aktuellen Stand gebracht werden. Dies zeigt Figur 7.

Zuerst werden die restlichen zu diesem Befehl gehörenden Daten vom Anschluss A gelesen. Gemäss der Definition für die Logik der Vorrichtung wird diese Information mit einem "CR" Zeichen abgeschlossen. Nach Empfang dieses Zeichens beendet die Vorrichtung das Speichern der empfangenen Daten.

Aus diesen Daten bestimmt das Programm, welches Konto belastet werden soll. Im Langzeitspeicher werden mehrere Taxkontos unterhalten, von denen jedes zu einem Applikationsprogramm der Rechenanlage gehört. In der Folge wird das ausgewählte Konto und das Generalkonto (Summe) um einen Betrag verkleinert, welcher den am Anschluss A empfangenen Daten entspricht.

Der neue Wert des Kontos wird in den Langzeitspeicher zurückgeschrieben. In der Folge wird geprüft, ob das Generalkonto (welches als die Summe aller Konten gebildet ist) erschöpft ist. Wenn ja, wird eine negative Rückmeldung zum Anschluss A geschickt, wenn nein, eine positive Rückmeldung. Danach geht das Programm wieder in den Erkennungsteil zurück, was die Vorrichtung für die nächsten Zeichen transparent werden lässt.

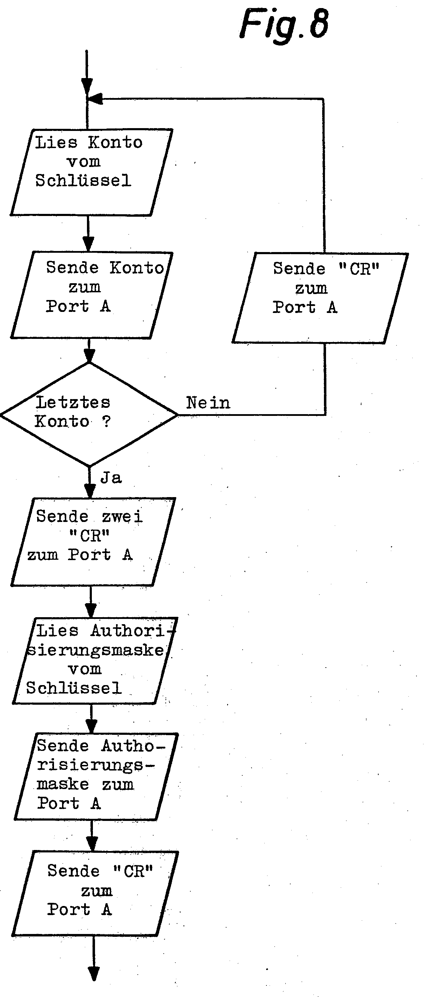

Wird eine (ESC,ESC,2) Sequenz empfangen, fragt das Programm alle Konten im Langzeitspeicher ab und überträgt die aktuellen Werte an den Anschluss A (Figur 8). Jedes Konto ist vom vorherigen durch ein "CR" Zeichen getrennt.

Nach Durchlauf aller Konten wird ein zusätzlicher "CR" Kode an den Anschluss A übertragen.

Nachfolgend wird die Zugangsmaske (Authorisierungsmaske) aus dem Langzeitspeicher geholt und an den Anschluss A gegeben.

Diese Maske wird nicht für die Taxierung benötigt, sondern dient zur Identifikation des Benützers des (abtrennbaren) Langzeitspeichers.

0116327

Die Zugangsmaske identifiziert nicht nur den Benützer des Schlüsselspeichers, sondern teilt dem Programm der Rechenanlage auch mit, in welchem Mass dieser Benützer Zugang zur Rechenanlage hat. Die Maske besteht aus einem geordneten Zeichensatz, welcher Zeichen für Zeichen an den Anschluss A übertragen und mit "CR" abgeschlossen wird. Die Behandlung dieser Daten wird hier nicht definiert und kann von einer Rechenanlage zur anderen unterschiedlich sein.

Nach Uebertragung aller dieser Daten an den Anschluss A geht das Programm wieder zum Erkennungsteil über und macht die Vorrichtung transparent.

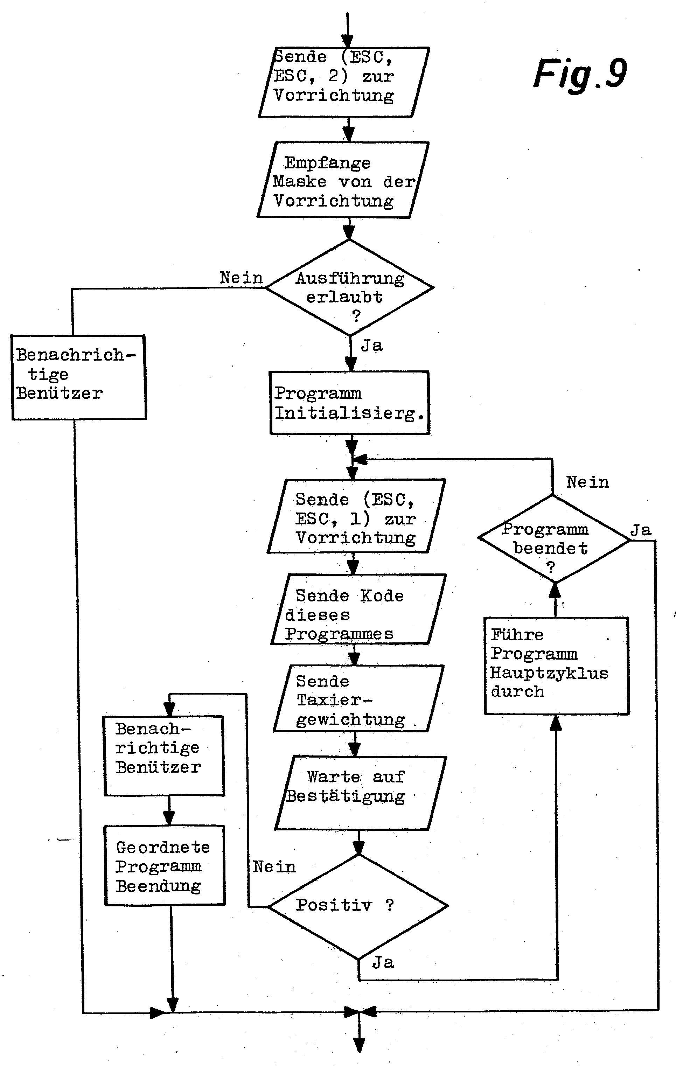

Figur 9 zeigt einen Vorschlag für den Aufbau eines Applikationsprogramms. Beim Beginn der Ausführung auf der Rechenanlage sendet das Programm die Sequenz (ESC,ESC,2) an den Druckeranschluss, bzw. an jenen Anschluss (Leitung), an dem die Vorrichtung angeschlossen ist. Dann erhält das Programm die Zugangsmaske aus diesem Anschluss und bestimmt, ob der Benützer und in welchem Mass zur Benützung dieser Funktion authorisiert ist.

Ist dieser Test negativ, informiert das Programm den Benützer, dass seine Zugangserlaubnis nicht ausreicht und beendet die Ausführung.

Bei der Ausführung jeder gösseren Transaktion des Programms (z.B. einer erstellten Rechnung, einer eingegebenen Adresse), sollte die Sequenz (ESC,ESC,1...,CR) zur Vorrichtung übermittelt werden, um den Benützer proportional zum Gebrauch des Programms zu belasten.

Immer wenn die Sequenz (ESC,ESC,1) übermittelt wird, muss die Identifikation des Programms (z.B. Lohnabrechnung, Hauptbuchhaltung, Textbearbeitung) und die relative Gewichtung der Taxation (wie viele Taxeinheiten es kostet) angegeben werden. Diese Sequenz wird mit einem "CR" Zeichen abgeschlossen. Danach sollte das Programm zum Empfang der Rückmeldung von der Vorrichtung bereit sein. Wenn diese positiv ist, läuft das Programm weiter ab,

0116327

wenn nicht, wird der Benützer informiert, dass ein Kredit aufgebraucht ist und das Programm stellt seine Arbeit geordnet ein. Diese erzwungene Beendigung muss alle nötigen Schritte (z.B. das Schliessen von Files) enthalten, um die Benützerdaten zu erhalten.

Patentansprüche
--------------------------------

1. Vorrichtung für Rechenanlagen zur Erfassung der Benützungsintensität von Rechnerprogrammen, gekennzeichnet durch eine, mit mindestens einer Datenleitung der Rechenanlage verbundene Anordnung zur Erkennung von den Rechnerprogrammen eigenen Taxierdaten und eine Speicheranordnung zur Aufnahme der Taxierdaten.

2. Vorrichtung nach Anspruch 1, dadurch gekennzeichnet, dass die Speicheranordnung eine Leseanordnung zur Ausgabe der Taxierdaten aufweist.

3. Vorrichtung nach Anspruch 1 oder 2, dadurch gekennzeichnet, dass die Speicheranordnung eine Sperranordnung zur Sperrung des Gebrauchs eines Taxierdaten ausgebenden Programmes aufweist.

4. Vorrichtung nach Anspruch 3, gekennzeichnet durch einen Vergleicher, durch welchen die Sperranordnung aktivierbar ist, wenn ein wählbarer Speicherinhalt der Speicheranordnung erreicht ist.

5. Vorrichtung nach einem der vorhergehenden Ansprüche, dadurch gekennzeichnet, dass die Speicheranordnung einen von der Anordnung trennbaren tragbaren Speicher aufweist.

6. Vorrichtung nach Anspruch 5, dadurch gekennzeichnet, dass der tragbare Speicher ein magnetisches Speichermedium aufweist.

7. Vorrichtung nach Anspruch 5, dadurch gekennzeichnet, dass der tragbare Speicher einen Halbleiterspeicher aufweist.

8. Vorrichtung nach Anspruch 5, dadurch gekennzeichnet, dass der tragbare Speicher bei Verbindung mit der Speicheranordnung zur Akkumulierung mindestens eines Teils der Taxierdaten ausgebildet und getrennt von der Speicheranordnung lesbar ist.

9. Vorrichtung nach Anspruch 5 oder 8, dadurch gekennzeichnet, dass der tragbare Speicher einen Bereich, in den bei Trennung von der Speicheranordnung Daten einlesbar sind, aufweist, welcher bei Verbindung mit der Speicheranordnung in Abhängigkeit von den Taxierdaten löschbar ist.

10. Vorrichtung nach den Ansprüchen 3,4 und 9, dadurch gekennzeichnet, dass der Vergleicher zur Sperrung einer Programmes bei Erreichung eines wählbaren Speicherinhaltes des tragbaren Speichers ausgebildet ist.

11. Vorrichtung nach einem der Ansprüche 5 bis 10, dadurch gekennzeichnet, dass der tragbare Speicher einen Bereich zur Aufnahme von Benützeridentifikationsdaten aufweist.

12. Vorrichtung nach einem der vorhergehenden Ansprüche, dadurch gekennzeichnet, dass die Erkennungsanordnung mit einer seriellen Datenleitung der Rechenanlage verbunden ist.

13. Vorrichtung nach einem der Ansprüche 1 bis 11, dadurch gekennzeichnet, dass die Erkennungsanordnung mit mehreren, Daten parallel führenden Datenleitungen verbundden ist.

Fig.1

Fig. 2a

Fig.2b

Fig. 3

Fig. 4a

0116327

Fig.4b

0116327

Fig. 5

8/11

0116327

Fig.6

Initialisierung

Lies Port A in CHAR

CHAR="ESC" ? — Ja

Nein — Sende CHAR zum Port B

Lies Port A in CHAR

CHAR="ESC" ? — Nein / Ja

Sende "ESC" zum Port B

Sende CHAR zum Port B

Lies Port A in CHAR

CHAR="1" ? — Verringere Zähler (siehe Fig.7)

CHAR="2" ? — Uebermittle Status (siehe Fig.8)

Sende zwei "ESC" zum Port B

Sende CHAR zum Port B

**Fig.7**

```
        │
        ▼
┌─────────────────┐
│ Lies Port A,    │
│ speichere       │
│ in REC          │
└─────────────────┘
        │
        ▼
       ╱╲
      ╱  ╲
     ╱"CR" ╲    Nein
    ╱empfangen╲──────→
    ╲    ?    ╱
     ╲      ╱
      ╲    ╱
       ╲  ╱
        ╲╱
        │ Ja
        ▼
┌─────────────────┐
│ Aus REC berechnen,│
│ welches Programm │
│ verrechnet wird  │
└─────────────────┘
        │
        ▼
┌─────────────────┐
│ Lies ausge-     │
│ wähltes Konto   │
│ vom Schlüssel   │
└─────────────────┘
        │
        ▼
┌─────────────────┐
│ Verringere ausge-│
│ wähltes Konto und│
│ Generalkonto    │
└─────────────────┘
        │
        ▼
┌─────────────────┐
│ Schreibe die    │
│ neuen Werte     │
│ zurück in den   │
│ Schlüssel       │
└─────────────────┘
        │
        ▼
       ╱╲
      ╱  ╲
     ╱General╲
    ╱konto    ╲──────→
    ╲erschöpft╱
     ╲   ?  ╱
      ╲    ╱
       ╲  ╱
        ╲╱
        │
        ▼                          ▼
┌─────────────────┐      ┌─────────────────┐
│ Sende pos.      │      │ Sende neg.      │
│ Meldung         │      │ Meldung         │
│ zum Port A      │      │ zum Port A      │
└─────────────────┘      └─────────────────┘
        │
        ▼
```

## Fig.8

0116327

**Fig.9**

```
        │
        ▼
  ┌──────────────┐
  │ Sende (ESC,  │
  │ ESC, 2) zur  │
  │ Vorrichtung  │
  └──────────────┘
        │
        ▼
  ┌──────────────┐
  │ Empfange     │
  │ Maske von der│
  │ Vorrichtung  │
  └──────────────┘
        │
        ▼
       ╱╲
      ╱  ╲
 Nein╱ Ausführung╲
◄───╱  erlaubt    ╲
    ╲      ?      ╱
     ╲          ╱
      ╲        ╱
        │ Ja
        ▼
  ┌──────────────┐
  │ Programm     │
  │ Initialisierg│
  └──────────────┘
        │
        ▼
  ┌──────────────┐
  │ Sende (ESC,  │
  │ ESC, 1) zur  │
  │ Vorrichtung  │
  └──────────────┘
        │
        ▼
   ╱ Sende Kode ╱
  ╱  dieses     ╱
 ╱ Programmes  ╱
        │
        ▼
   ╱ Sende     ╱
  ╱ Taxier-    ╱
 ╱ gewichtung ╱
        │
        ▼
   ╱ Warte auf    ╱
  ╱ Bestätigung  ╱
        │
        ▼
       ╱╲
      ╱  ╲
     ╱Positiv?╲
     ╲        ╱
      ╲      ╱
        │ Ja
```

Benachrichtige
Benützer

Benachrichtige
Benützer

Geordnete
Programm
Beendung

Nein

Führe
Programm
Hauptzyklus
durch

Programm
beendet
?

Nein

Ja

0116327

Nummer der Anmeldung

EP  84 10 0880

**Europäisches Patentamt**

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | IBM TECHNICAL DISCLOSURE BULLETIN, Band 25, Nr. 3B, August 1982, Seite 1765, New York, US J.A. HOOTEN u.a.: "Flexible transparent field metering" * Seite 1765, Zeilen 1-6, 17-20, 25-26 * | 1,2,5 | G 06 F  11/34 G 06 F  11/30 |
| | --- | | |
| A | DE-A-3 205 852 (SIEMENS) * Seite 6, Zeilen 5-20; Seite 8, Zeilen 6-8; Figur 3 * | 1 | |
| | --- | | |
| A | US-A-4 231 106 (HEAP) * Spalte 1, Zeile 61 - Spalte 2, Zeile 10; Spalte 3, Zeilen 25-27 * | 1 | |
| | --- | | **RECHERCHIERTE SACHGEBIETE (Int. Cl. ³)** |
| A | PROCEEDINGS OF THE JOINT COMPUTER CONFERENCE, 5.-7. Dezember 1972, Anaheim, Californien, (A.F.I.P.S. CONFERENCE, Band 41), AFIP PRESS C.B. KREITZBERG u.a.: "An approach to job pricing in a multi-programming environment" * Seite 121, Spalte 1, Zeilen 8-30 * | 1 | G 06 F  11/34 G 06 F  11/30 |
| | --- | | |
| A | US-A-3 763 474 (DON FREEMAN) * Seite 2, Zeilen 50-59; Seite 6, Zeilen 46-48 * | 1 | |
| | ----- | | |

Der vorliegende Recherchenbericht wurde für alle Patentansprüche erstellt.

| Recherchenort | Abschlußdatum der Recherche | Prüfer |
|---|---|---|
| DEN HAAG | 08-05-1984 | GUIVOL Y. |